(19)

Europäisches
Patentamt
European
Patent Office
Office européen
des brevets

(11) **EP 3 045 476 A1**

(12) **EUROPEAN PATENT APPLICATION**
published in accordance with Art. 153(4) EPC

(43) Date of publication:
**20.07.2016 Bulletin 2016/29**

(21) Application number: **14844231.2**

(22) Date of filing: **25.08.2014**

(51) Int Cl.:
**C08B 15/00** (2006.01)  **D21C 9/10** (2006.01)

(86) International application number:
**PCT/JP2014/072171**

(87) International publication number:
**WO 2015/037424 (19.03.2015 Gazette 2015/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.09.2013 JP 2013189747**

(71) Applicant: **Mitsubishi Gas Chemical Company,
Inc.
Tokyo 100-8324 (JP)**

(72) Inventors:
• **TSURUGA Takamitsu**
 **Tokyo 125-8601 (JP)**
• **OYANAGI Kenji**
 **Tokyo 125-8601 (JP)**
• **HAMAGUCHI Takayoshi**
 **Tokyo 125-8601 (JP)**

(74) Representative: **Müller-Boré & Partner
Patentanwälte PartG mbB
Friedenheimer Brücke 21
80639 München (DE)**

(54) **METHOD FOR PRODUCING CELLULOSE**

(57)    The process of the present invention for preparation of cellulose uses:
chemical pulp; and
a mixed solution containing 1.0% to 30.0% by weight of sulfuric acid, 0.5% to 40% by weight of hydrogen peroxide and 50.0% to 94.0% by weight of water,
wherein the resulting cellulose has a polymerization degree of 350 or less and a brightness by Hunter of 90% or more.

EP 3 045 476 A1

## Description

FIELD

The present invention relates to a process for preparing cellulose.

BACKGROUND

The cellulose is used for various applications including food, pharmaceutical and industrial applications.
When added to food products, cellulose produces thickening and dispersing effects, which lead to an improved texture. In addition, its water and oil absorption properties are also effective for improving the texture of fried products and so on.
In the case of pharmaceutical preparations, cellulose is added as an excipient for molding, extending and/or diluting purposes to solid formulations such as tablets, powders (triturates), granules, etc.
Moreover, cellulose is also used as a filter aid, which is added to slurries for improving their filterability.
Furthermore, cellulose may be added for the purpose of improving the welding operability of coated arc welding rods and/or imparting excellent mechanical properties. Cellulose may also be used as an alternative to asbestos in the matrix for automobile friction materials, etc.
Cellulose used for such purposes as described above is required to have the feature of being in the form of white powders which are excellent in flowability and disintegrability. The flowability and disintegrability of cellulose are known to be affected by its polymerization degree.

Patent Document 1 discloses a process in which purified wood pulp or the like is hydrolyzed by a mineral acid, ferric chloride and others to prepare a cellulose product having level-off degree of polymerization. However, there is no description about a brightness of the resulting cellulose.
Non-Patent Document 1 discloses a process in which native cellulose with high purity is hydrolyzed by a mineral acid, and then purified and dried to obtain microcrystalline cellulose.
Patent Document 2 discloses a process for preparing microcrystalline cellulose starting from unbleached kraft pulp or bleached kraft pulp. This process is based on hydrolysis by a peroxy acid, but not on hydrolysis by a mineral acid alone, such as hydrochloric acid or sulfuric acid.
Patent Document 3 discloses a process in which wood flour prepared from wood chips is treated with an acidic aqueous solution, and it is also shown that hydrogen peroxide may also be used in this treatment. This process is designed to obtain microfibrous cellulose, but not crystalline cellulose, and also cannot be used to obtain cellulose with high brightness.
Patent Document 4 describes that ozone treatment and/or addition of a peroxide such as hydrogen peroxide may be conducted during acid hydrolysis of pulp cellulose by a mineral acid such as sulfuric acid.

Prior Art Documents

Patent Documents

Patent Document 1: US Patent No. 2,978,446
Patent Document 2: Jpn. PCT National Publication No. 2003-504427
Patent Document 3: Jpn. Pat. Appln. KOKAI Publication No. 2012-036508
Patent Document 4: Jpn. Pat. Appln. KOKAI Publication No. JP-A-2005-029627

Non-Patent Documents

Non-Patent Document: "Pulp and Paper Technology Times", August 1985, page 5

SUMMARY

TECHNICAL PROBLEM

By reference to Patent Document 1 and Non-Patent Document 1, the inventors have attempted to hydrolyze unbleached kraft pulp or bleached pulp by sulfuric acid to thereby prepare cellulose with a reduced polymerization degree. As a result, the inventors have found that the resulting cellulose tends to be colored.

Likewise, by reference to Patent Document 2, the inventors have attempted to hydrolyze unbleached kraft pulp or bleached pulp by active oxygen to thereby prepare cellulose with a lower polymerization degree and a higher brightness. As a result, the inventors have found that there are problems as described below. In the process of Patent Document 2, active oxygen is derived, for example, from a peroxy acid, while the peroxy acid is obtained, for example, by a reaction between sufficient amounts of an acid and a peroxide. When using a diluted peroxide for this purpose, its concentration is required to be 50% or higher. In terms of safety, transportability and shelf life, peroxide products in various concentrations ranging from high to low are commercially distributed. For this reason, it is not convenient unless peroxide of various concentrations can be used. Moreover, a high concentration of peroxy acid is known to be corrosive to stainless steel materials, and hence there arises another problem in that commonly used instruments and tools cannot be used for preparation of a peroxy acid.

A case where the active oxygen used in Patent Document 2 is derived from, for example, peroxymonosulfuric acid will be considered here. Peroxymonosulfuric acid is considered to be present in an equilibrium mixture of sulfuric acid and hydrogen peroxide. If a reaction solution used for hydrolysis of pulp in Patent Document 2 has equilibrium composition, preparation of cellulose is not affected by the concentration of sulfuric acid or aqueous hydrogen peroxide used as a starting material, and should be affected only by the concentration of sulfuric acid or hydrogen peroxide after dilution with water. As a result of studies in this regard, the inventors have found that when peroxymonosulfuric acid is generated by reacting a high concentration of aqueous hydrogen peroxide (e.g., 50% or higher concentration) with concentrated sulfuric acid, the resulting mixed solution, even diluted with water after preparation, has composition different from the equilibrium composition in the sulfuric acid-hydrogen peroxide-water system. Moreover, the inventors have also found that the yield of peroxymonosulfuric acid becomes higher when aqueous hydrogen peroxide used as a starting material has a higher concentration. Namely, in the technique disclosed in Patent Document 2, a high concentration of peroxymonosulfuric acid, which is present in a mixed solution in a non-equilibrium state, is used for pulp degradation.

Pulp tends to be swollen upon water absorption, and hence the amount of a chemical solution required to soak pulp is several times to several tens of times larger than the weight of the pulp. In light of this fact, Patent Document 2 is modified to assume that a peroxide and an acid are used in amounts larger than their minimum amounts required for pulp degradation. In this case, the generated peroxy acid will be present at a concentration far away from its equilibrium concentration in the mixed solution, so that there arises a problem in that the peroxy acid concentration tends to vary over time.

Moreover, in the case of using a mixed solution prepared by reacting a high concentration of peroxide with a high concentration of acid and diluting with water subsequently, there arises a problem in that it is difficult to reuse a liquid waste after reaction with pulp. The process of Patent Document 2 requires a sufficient amount of peroxy acid generated by a reaction between a high concentration of peroxide and a high concentration of acid. During the peroxy acid generation, the peroxide and acid used as starting materials have been consumed, while the subsequent dilution step with water also greatly reduces the peroxide and acid concentrations in the mixed solution. Thus, the liquid waste after reaction, in which the concentrations of these substances required for peroxy acid generation have been reduced, cannot be directly reused for the same reaction. For reuse of the liquid waste after reaction, there arises a need to separate the liquid waste by distillation equipment or the like and to recover each component. Thus, the reuse of the liquid waste is not cost effective.

To solve such problems as stated above, the present invention aims to provide a process for preparing cellulose having an average polymerization degree of 350 or less and a brightness by Hunter of 90% or more by using chemical pulp and a mixed solution of sulfuric acid, hydrogen peroxide and water.

SOLUTION TO PROBLEM

As a result of studies on a process for preparing cellulose, the inventors have found a process which enables the preparation of cellulose having an average polymerization degree of 350 or less and a brightness by Hunter of 90% or more. This finding led to the completion of the present invention. Namely, the present invention encompasses the following embodiments.

[1] A process for preparing a cellulose, using:

a chemical pulp; and
a mixed solution containing 1.0% to 30.0% by weight of a sulfuric acid, 0.5% to 40% by weight of a hydrogen peroxide and 50.0% to 94.0% by weight of a water,
wherein the cellulose has a polymerization degree of 350 or less and a brightness by Hunter of 90% or more.
[1-2] A process for preparing a cellulose, comprising:

mixing a sulfuric acid, a hydrogen peroxide and a water to prepare a mixed solution; and
soaking a chemical pulp in the mixed solution, wherein
the mixed solution contains 1.0% to 30.0% by weight of the sulfuric acid, 0.5% to 40% by weight of the hydrogen peroxide and 50.0% to 94.0% by weight of the water, and
the cellulose has a polymerization degree of 350 or less and a brightness by Hunter of 90% or more.

[2] The process according to [1], wherein
the mixed solution has a mix ratio of the sulfuric acid (x), the hydrogen peroxide (y) and the water (z), which is expressed by (x, y, z),
the (x, y, z) has a value present on a line or inside of a heptagon ABCDEFG, and
the heptagon ABCDEFG is formed by vertices A to G having the following (x, y, z) in a ternary diagram for the sulfuric acid (x)-hydrogen peroxide (y)-water (z):

A (3.0, 3.0, 94.0)
B (7.0, 0.5, 92.5)
C (24.0, 0.5, 75.5)
D (30.0, 3.0, 67.0)
E (30.0, 10.0, 60.0)
F (10.0, 40.0, 50.0)
G (1.0, 24.0, 75.0)

(wherein x, y and z each represent a ratio by weight, and x + y + z = 100).
[3] The process according to [2], wherein the mix ratio (x, y, z) has a value present on a line or inside of a heptagon HICDEFG, provided that:

the vertex A is replaced with a vertex H (3.0, 9.0, 88.0); and
the vertex B is replaced with a vertex I (6.0, 2.0, 92.0).

[4] The process according to [2], wherein the mix ratio (x, y, z) has a value present on a line or inside of a heptagon JKCDEFG, provided that:

the vertex A is replaced with a vertex J (6.0, 9.0, 85.0); and
the vertex B is replaced with a vertex K (12.0, 3.0, 85.0).

[5] The process according to any one of [1] to [4], comprising:

mixing the sulfuric acid, the hydrogen peroxide and the water to prepare the mixed solution; and
soaking the chemical pulp in the mixed solution.

[6] The process according to any one of [1] to [5], wherein a reaction temperature of the chemical pulp and the mixed solution is 60°C to 110°C.
[7] The process according to [5] or [6], wherein the mixed solution is prepared by adding the sulfuric acid and the hydrogen peroxide to the water.
[8] The process according to any one of [5] to [7], wherein the mixed solution is prepared by mixing the sulfuric acid, an aqueous hydrogen peroxide having a concentration of less than 50% by weight, and the water.

[8-1]The process according to any one of [5] to [8] above, wherein the mixed solution is prepared by adding the sulfuric acid and the aqueous hydrogen peroxide having a concentration of less than 50% by weight to the water.

[9] The process according to any one of [1] to [8], wherein the mixed solution contains a peroxymonosulfuric acid in a concentration of 0.01% to 25% by weight in the mixed solution.
[10] The process according to [9], wherein the concentration of the peroxymonosulfuric acid in the mixed solution is equal to or less than a concentration of the peroxymonosulfuric acid in an equilibrium solution containing a sulfuric acid, a hydrogen peroxide and a water.
[11] The process according to [10], wherein the concentration of the peroxymonosulfuric acid in the mixed solution is 0.01% to 17.1% by weight.
[12] Cellulose prepared by the process according to any one of [1] to [11], having a polymerization degree of 350 or less and a brightness by Hunter of 90% or more.

[13] A process for preparing a cellulose starting from a chemical pulp with the use of a sulfuric acid, a hydrogen peroxide and a water,
wherein the process uses a mixed solution represented by a value present on a line or inside of a heptagon ABCDEFG found in a ternary diagram for a system of the sulfuric acid (x)-the hydrogen peroxide (y)-the water (z), wherein the heptagon has the following vertices, as expressed by (x, y, z) :

A (3.0, 3.0, 94.0)
B (7.0, 0.5, 92.5)
C (24.0, 0.5, 75.5)
D (30.0, 3.0, 67.0)
E (30.0, 10.0, 60.0)
F (10.0, 40.0, 50.0)
G (1.0, 24.0, 75.0)

(wherein x, y and z each represent a ratio by weight, and x + y + z = 100).
[14] The process according to [13], wherein the (x, y, z) has a value present on a line or inside of a heptagon HICDEFG, provided that:

the vertex A is replaced with a vertex H (3.0, 9.0, 88.0); and
the vertex B is replaced with a vertex I (6.0, 2.0, 92.0).

[15] The process according to [13], wherein the (x, y, z) has a value present on a line or inside of a heptagon JKCDEFG, provided that:

the vertex A is replaced with a vertex J (6.0, 9.0, 85.0); and
the vertex B is replaced with a vertex K (12.0, 3.0, 85.0).

[16] The process according to any one of [13] to [15], wherein a temperature at which the chemical pulp is soaked in the mixed solution is 60°C or higher up to 110°C or lower.
[17] The process according to any one of [13] to [16], wherein the sulfuric acid, the hydrogen peroxide and the water (z) are pre-mixed before using.
[18] The process according to any one of [13] to [17], wherein the concentration of a peroxymonosulfuric acid in the mixed solution is equal to or less than a concentration of the peroxymonosulfuric acid in an equilibrium solution containing a sulfuric acid, a hydrogen peroxide and a water.
[19] Cellulose prepared by the process according to any one of [13] to [18], having a polymerization degree of 350 or less and a brightness by Hunter of 90% or more.
[20] The process according to any one of [1] to [11] and [13] to [19] above, which further comprises reusing the mixed solution.

ADVANTAGEOUS EFFECTS OF INVENTION

The process of the above embodiments enables the preparation of cellulose having an average polymerization degree of 350 or less and a brightness by Hunter of 90% or more. Moreover, the process of the above embodiments also enables the reuse of a solution required for the preparation of cellulose.

BRIEF DESCRIPTION OF DRAWINGS

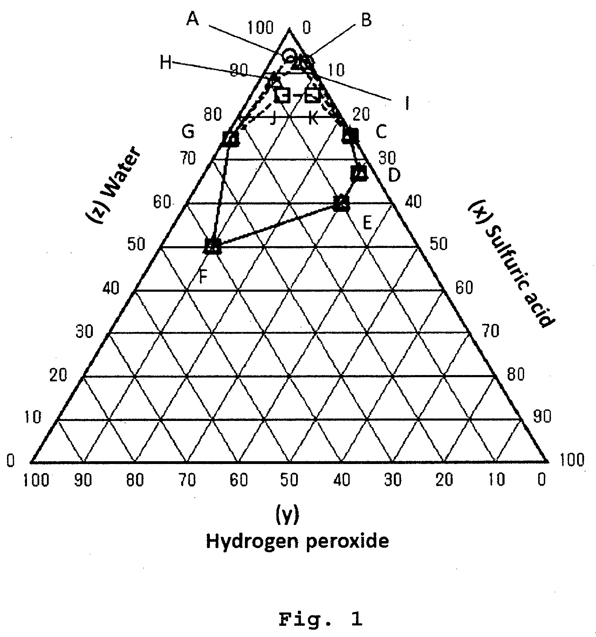

FIG. 1 shows a ternary diagram for sulfuric acid, hydrogen peroxide and water.

DESCRIPTION OF EMBODIMENTS

<Summary of process>

According to one embodiment, the process for preparing cellulose uses:

chemical pulp; and
a mixed solution containing 1.0% to 30.0% by weight of sulfuric acid, 0.5% to 40% by weight of hydrogen peroxide and 50.0% to 94.0% by weight of water.

More specifically, the process for preparing cellulose comprises:

mixing sulfuric acid, hydrogen peroxide and water to prepare the mixed solution containing 1.0% to 30.0% by weight of sulfuric acid, 0.5% to 40% by weight of hydrogen peroxide and 50.0% to 94.0% by weight of water; and soaking chemical pulp in the mixed solution.

Namely, chemical pulp used as a starting material is treated with the mixed solution containing sulfuric acid, hydrogen peroxide and water to reduce the polymerization degree of the pulp. The process for preparing cellulose may further comprise the step of purifying cellulose, the step of reusing the mixed solution containing water, hydrogen peroxide and sulfuric acid, and other steps.

By using the above process, it is possible to obtain crystalline cellulose having an average polymerization degree of 350 or less and a brightness by Hunter of 90% or more. Moreover, cellulose suitable for food, pharmaceutical, industrial and other applications can be prepared.

<Starting materials>

(1) Sulfuric acid

Techniques to prepare sulfuric acid include preparation from sulfur dioxide, preparation by a nitration process, and preparation by a contact process, any of which may be used for this purpose.

Commercially distributed products of sulfuric acid include concentrated sulfuric acid whose concentration is 90% to 98% by weight and dilute sulfuric acid whose concentration is less than 90% by weight. However, if these commercially distributed products can be adjusted to the desired concentration, their concentration is not limited in any way. They may be used by being diluted to achieve the intended concentration. It should be noted that commercially distributed products include industrial sulfuric acid and refined sulfuric acid, either of which may be used for this purpose or both of which may be used in combination.

(2) Hydrogen peroxide

Techniques to prepare hydrogen peroxide include an organic process starting from anthraquinone or the like, an electrolytic process starting from sulfuric acid, a the direct process using oxygen and hydrogen, any of which may be used for this purpose. Alternatively, two or more techniques may be used in combination.

Commercially distributed products of aqueous hydrogen peroxide have a concentration of 35% to 70% by weight. However, these commercially distributed products are not limited to this concentration range if they can be adjusted to the desired concentration.

Commercially distributed products of aqueous hydrogen peroxide include those for industrial, electronic industrial and food additive applications, any of which may be used for this purpose. Alternatively, two or more products may be used in combination. When two or more products are used in combination, their combination is not limited in any way.

(3) Chemical pulp

Chemical pulp is prepared from pulp chips. Starting materials for pulp chips include needle-leaved trees typified by radiata pine and spruce, as well as broad-leaved trees typified by eucalyptus and acacia. Pulp chips derived from these needle-leaved trees and broad-leaved trees may be used alone or two or more of them may be used in combination. When two or more types of pulp chips are used in combination, their combination is not limited in any way.

Chemical pulp may be prepared starting from the above pulp chips by a sulfite digestion process or a kraft digestion process or a combination thereof.

Chemical pulp prepared by the above process may be either unbleached pulp or bleached pulp, or a combination thereof.

Moreover, chemical pulp includes paper pulp and highly refined dissolving pulp, either of which may be used or both of which may be used in combination.

Chemical pulp may be used in a water-containing state after being digested or bleached, or alternatively, in a state of dried sheet pulp.

Chemical pulp for use in the embodiment may be any of the above types of pulp, although bleached pulp is preferred for use.

<Preparation steps>

Each preparation step will be explained below in sequence.

(1) Composition of mixed solution containing sulfuric acid, hydrogen peroxide and water

The sulfuric acid concentration in the mixed solution of sulfuric acid-hydrogen peroxide-water is 1.0% to 30.0% by weight, preferably 1.0% to 24.0% by weight, and more preferably 2.0% to 20.0% by weight. The hydrogen peroxide concentration in the mixed solution is 0.5% to 40.0% by weight, preferably 0.5% to 24.0% by weight, and more preferably 0.5% to 15.0% by weight. The ratio of water in the mixed solution is 50.0% to 94.0% by weight, 55.5% to 94.0% by weight, and more preferably 65.0% to 94.0% by weight. In this regard, the sulfuric acid concentration or hydrogen peroxide concentration in the mixed solution means the concentration (% by weight) calculated as undiluted (i.e., 100%) sulfuric acid or hydrogen peroxide, relative to the mixed solution.

In the case of using the mixed solution having a ratio of three components (sulfuric acid, hydrogen peroxide and water) as represented by values in the above ranges, it is possible to prepare cellulose having an average polymerization degree of 350 or less and a brightness by Hunter of 90% or more.

Preferably, the ratio of sulfuric acid (x), hydrogen peroxide (y) and water (z) in the mixed solution, which is expressed by (x, y, z), has a value present on a line or inside a heptagon ABCDEFG shown in Fig. 1. The heptagon ABCDEFG is formed by vertices A to G having the following (x, y, z) in a ternary diagram for the sulfuric acid (x)-hydrogen peroxide (y)-water (z) system shown in Fig. 1:

A (3.0, 3.0, 94.0)
B (7.0, 0.5, 92.5)
C (24.0, 0.5, 75.5)
D (30.0, 3.0, 67.0)
E (30.0, 10.0, 60.0)
F (10.0, 40.0, 50.0)
G (1.0, 24.0, 75.0)

(wherein x, y and z each represent a ratio by weight, and x + y + z = 100).

More preferably, the mix ratio (x, y, z) has value present on a line or inside a heptagon HICDEFG found in the ternary diagram shown in Fig. 1, provided that:

the vertex A is replaced with vertex H (3.0, 9.0, 88.0); and
the vertex B is replaced with vertex I (6.0, 2.0, 92.0).

Even more preferably, the mix ratio (x, y, z) has a value present on a line or inside a heptagon JKCDEFG found in the ternary diagram shown in Figure 1, provided that:

the vertex A is replaced with vertex J (6.0, 9.0, 85.0); and
the vertex B is replaced with vertex K (12.0, 3.0, 85.0).

In the case of using a mixed solution having a ratio of three components (sulfuric acid, hydrogen peroxide and water) as represented by a value present on the line or inside the heptagon ABCDEFG, it is possible to prepare cellulose having an average polymerization degree of 350 or less and a brightness by Hunter of 90% or more.

In the case of using a mixed solution having a ratio of three components as represented by a value present on the line or inside the heptagon HICDEFG, it is possible to prepare cellulose having an average polymerization degree of 300 or less and a brightness by Hunter of 90% or more.

In the case of using a mixed solution having a ratio of three components as represented by a value present on the line or inside the heptagon JKCDEFG, it is possible to prepare cellulose having an average polymerization degree of 250 or less and a brightness by Hunter of 90% or more.

In the case of using a mixed solution having a ratio of three components as represented by a value lying outside the line segment AB (i.e., on the upper side from the line segment AB), the resulting cellulose will have an average polymerization degree exceeding 350, so that the polymerization degree cannot be reduced.

In the case of using a mixed solution having a ratio of three components as represented by a value lying outside the line segment BC (i.e., on the right side from the line segment BC), even when cellulose having an average polymerization degree of 350 or less is obtained, its brightness by Hunter will be less than 90%. Alternatively, even when cellulose having a brightness by Hunter of 90% or more is obtained, its average polymerization degree will exceed 350.

In the case of using a mixed solution having a ratio of three components as represented by a value lying outside the line segments CD, DE, EF and FG (i.e., on the lower side from these line segments), such a mixed solution is not preferred because sufficient brightness cannot be obtained. This is because heat generation upon mixing sulfuric acid and hydrogen peroxide is so large as to elevate the reaction temperature to thereby bring the reaction solution to a boil, as a result of which pulp turns black.

In the case of using a mixed solution having a ratio of three components as represented by a value lying outside the line segment AG (i.e., on the left side from the line segment AG), the resulting cellulose will have an average polymerization degree exceeding 350, so that the polymerization degree cannot be reduced.

In a mixed solution containing sulfuric acid, hydrogen peroxide and water, peroxymonosulfuric acid is generated, and the concentration of peroxymonosulfuric acid in the mixed solution is preferably 0.01% to 25% by weight, more preferably 0.01% to 17.1% by weight, particularly preferably 0.01% to 6.4% by weight, and most preferably 0.01% to 4.0% by weight. These values are measured at room temperature (25°C) where the peroxymonosulfuric acid concentration in the mixed solution remains almost unchanged over time.

Although the preferred concentration of peroxymonosulfuric acid has been described above, peroxymonosulfuric acid is not so important in the present invention. Namely, there is no necessity to use peroxymonosulfuric acid in particularly high concentration, and this is because when using a mixed solution containing sulfuric acid, hydrogen peroxide and water at a ratio as described above, the average polymerization degree and brightness of the prepared cellulose will fall within the intended ranges. Moreover, in the process of the present invention, the brightness of cellulose after reaction is not increased simply when sulfuric acid or hydrogen peroxide is in high concentration, i.e., simply when peroxymonosulfuric acid is in high concentration. For this reason, the present invention does not require any intentional operation for generating peroxymonosulfuric acid. Namely, it is sufficient to mix sulfuric acid, hydrogen peroxide and water at a ratio as described above.

According to the process of the embodiment, it is possible to obtain cellulose having the desired polymerization degree and brightness even when peroxymonosulfuric acid is in low concentration in the mixed solution. For example, the concentration of peroxymonosulfuric acid in the mixed solution may be equal to or less than the concentration of peroxymonosulfuric acid in an equilibrium solution containing sulfuric acid, hydrogen peroxide and water. More specifically, such a concentration, expressed as the concentration of peroxymonosulfuric acid in the mixed solution, is 17.1% by weight or less, 0.01% to 6.4% by weight, or 0.01% to 4.0% by weight.

(2) Method for preparation of mixed solution containing sulfuric acid, hydrogen peroxide and water

Sulfuric acid, hydrogen peroxide and water are provided into a reactor in the mix ratio as described above, and mixed. The order of provision is not limited in any way. Likewise, any mixing equipment may be used for this purpose, either a tank-shaped container equipped with a stirrer or an external circulation system composed of a container and an external circulator connected thereto. Alternatively, a line mixer may also be used for this purpose. The mixing temperature may be 0°C to 100°C or less, preferably 20°C to 90°C. If uniform mixing is achieved, the mixing time is not limited in any way.

Hydrogen peroxide and sulfuric acid may be diluted with water before being provided into the reactor. Namely, there are 24 possible ways to provide sulfuric acid, hydrogen peroxide and water, as illustrated below (they are provided into the reactor in the order (1), (2) and (3) shown below). Provision may be conducted either slowly (e.g., dropwise) or quickly.

(1) concentrated sulfuric acid - (2) 50% by weight or more of aqueous hydrogen peroxide - (3) water
(1) concentrated sulfuric acid - (2) less than 50% by weight of aqueous hydrogen peroxide - (3) water
(1) concentrated sulfuric acid - (2) water - (3) 50% by weight or more of aqueous hydrogen peroxide
(1) concentrated sulfuric acid - (2) water - (3) less than 50% by weight of aqueous hydrogen peroxide
(1) diluted sulfuric acid - (2) 50% by weight or more of aqueous hydrogen peroxide - (3) water
(1) diluted sulfuric acid - (2) less than 50% by weight of aqueous hydrogen peroxide - (3) water
(1) diluted sulfuric acid - (2) water - (3) 50% by weight or more of aqueous hydrogen peroxide
(1) diluted sulfuric acid - (2) water - (3) less than 50% by weight of aqueous hydrogen peroxide
(1) water - (2) diluted sulfuric acid - (3) 50% by weight or more of aqueous hydrogen peroxide
(1) water - (2) diluted sulfuric acid - (3) less than 50% by weight of aqueous hydrogen peroxide
(1) water - (2) concentrated sulfuric acid - (3) 50% by weight or more of aqueous hydrogen peroxide
(1) water - (2) concentrated sulfuric acid - (3) less than 50% by weight of aqueous hydrogen peroxide
(1) water - (2) 50% by weight or more of aqueous hydrogen peroxide - (3) diluted sulfuric acid
(1) water - (2) 50% by weight or more of aqueous hydrogen peroxide - (3) concentrated sulfuric acid
(1) water - (2) less than 50% by weight of aqueous hydrogen peroxide - (3) diluted sulfuric acid
(1) water - (2) less than 50% by weight of aqueous hydrogen peroxide - (3) concentrated sulfuric acid

(1) less than 50% by weight of aqueous hydrogen peroxide - (2) diluted sulfuric acid - (3) water
(1) less than 50% by weight of aqueous hydrogen peroxide - (2) concentrated sulfuric acid - (3) water
(1) less than 50% by weight of aqueous hydrogen peroxide - (2) water - (3) concentrated sulfuric acid
(1) less than 50% by weight of aqueous hydrogen peroxide - (2) water - (3) diluted sulfuric acid
(1) 50% by weight or more of aqueous hydrogen peroxide - (2) water - (3) diluted sulfuric acid
(1) 50% by weight or more of aqueous hydrogen peroxide - (2) water - (3) concentrated sulfuric acid
(1) 50% by weight or more of aqueous hydrogen peroxide - (2) diluted sulfuric acid - (3) water
(1) 50% by weight or more of aqueous hydrogen peroxide - (2) concentrated sulfuric acid - (3) water (provided that concentrated sulfuric acid is introduced quickly, but not dropwise).

The expression "50% by weight or more (less than 50% by weight) of aqueous hydrogen peroxide" as used above is intended to mean that hydrogen peroxide is contained at a concentration of 50% by weight or more (less than 50% by weight) in aqueous hydrogen peroxide. The term "concentrated sulfuric acid" refers to an aqueous solution having a sulfuric acid concentration of 90% by weight or more, while the term "diluted sulfuric acid" refers to a dilution of concentrated sulfuric acid with water (e.g., an aqueous solution having a sulfuric acid concentration of 80% by weight or less, 50% by weight or less, 30% by weight or less, or 4% by weight or less). The concentration and amount of sulfuric acid or aqueous hydrogen peroxide to be used may be adjusted as appropriate, such that the ratio of sulfuric acid (as 100%), hydrogen peroxide (as 100%) and water in the resulting mixed solution falls within the above range (i.e., sulfuric acid: 1.0% to 30.0% by weight, hydrogen peroxide: 0.5% to 40.0% by weight, water: 50.0% to 94.0% by weight).

Preferably, the mixed solution is prepared by adding sulfuric acid and hydrogen peroxide to water. Namely, among the above embodiments for provision, those listed below are preferred.

(1) water - (2) diluted sulfuric acid - (3) 50% by weight or more of aqueous hydrogen peroxide
(1) water - (2) diluted sulfuric acid - (3) less than 50% by weight of aqueous hydrogen peroxide
(1) water - (2) concentrated sulfuric acid - (3) 50% by weight or more of aqueous hydrogen peroxide
(1) water - (2) concentrated sulfuric acid - (3) less than 50% by weight of aqueous hydrogen peroxide
(1) water - (2) 50% by weight or more of aqueous hydrogen peroxide - (3) diluted sulfuric acid
(1) water - (2) 50% by weight or more of aqueous hydrogen peroxide - (3) concentrated sulfuric acid
(1) water - (2) less than 50% by weight of aqueous hydrogen peroxide - (3) diluted sulfuric acid
(1) water - (2) less than 50% by weight of aqueous hydrogen peroxide - (3) concentrated sulfuric acid

Alternatively, the mixed solution is prepared by mixing sulfuric acid, less than 50% by weight of aqueous hydrogen peroxide and water. Namely, among the above embodiments for provision, those listed below are preferred.

(1) concentrated sulfuric acid - (2) less than 50% by weight of aqueous hydrogen peroxide - (3) water
(1) concentrated sulfuric acid - (2) water - (3) less than 50% by weight of aqueous hydrogen peroxide
(1) diluted sulfuric acid - (2) less than 50% by weight of aqueous hydrogen peroxide - (3) water
(1) diluted sulfuric acid - (2) water - (3) less than 50% by weight of aqueous hydrogen peroxide
(1) water - (2) diluted sulfuric acid - (3) less than 50% by weight of aqueous hydrogen peroxide
(1) water - (2) concentrated sulfuric acid - (3) less than 50% by weight of aqueous hydrogen peroxide
(1) water - (2) less than 50% by weight of aqueous hydrogen peroxide - (3) diluted sulfuric acid
(1) water - (2) less than 50% by weight of aqueous hydrogen peroxide - (3) concentrated sulfuric acid
(1) less than 50% by weight of aqueous hydrogen peroxide - (2) diluted sulfuric acid - (3) water
(1) less than 50% by weight of aqueous hydrogen peroxide - (2) concentrated sulfuric acid - (3) water
(1) less than 50% by weight of aqueous hydrogen peroxide - (2) water - (3) concentrated sulfuric acid
(1) less than 50% by weight of aqueous hydrogen peroxide - (2) water - (3) diluted sulfuric acid

More preferably, the mixed solution is prepared by adding sulfuric acid and hydrogen peroxide to water and using less than 50% by weight of aqueous hydrogen peroxide. Namely, among the above embodiments for provision, those listed below are more preferred.

(1) water - (2) diluted sulfuric acid - (3) less than 50% by weight of aqueous hydrogen peroxide
(1) water - (2) concentrated sulfuric acid - (3) less than 50% by weight of aqueous hydrogen peroxide
(1) water - (2) less than 50% by weight of aqueous hydrogen peroxide - (3) diluted sulfuric acid
(1) water - (2) less than 50% by weight of aqueous hydrogen peroxide - (3) concentrated sulfuric acid

Namely, preferred is an embodiment where sulfuric acid and hydrogen peroxide are added to water to thereby prepare a mixed solution containing 1.0% to 30.0% by weight of sulfuric acid, 0.5% to 40% by weight of hydrogen peroxide and 50.0% to 94.0% by weight of water (preferably a mix ratio of sulfuric acid, hydrogen peroxide and water is represented by a value present on the line or inside the above heptagon ABCDEFG, more preferably a mix ratio of sulfuric acid, hydrogen peroxide and water is represented by a value present on the line or inside the above heptagon HICDEFG, and particularly preferably a mix ratio of sulfuric acid, hydrogen peroxide and water is represented by a value present on the line or inside the above heptagon JKCDEFG). In the mixed solution thus prepared, the concentration of peroxymonosulfuric acid is preferably 0.01% to 25% by weight, and more preferably is equal to or less than the concentration of peroxymonosulfuric acid in an equilibrium solution containing sulfuric acid, hydrogen peroxide and water.

Alternatively, preferred is an embodiment where sulfuric acid, aqueous hydrogen peroxide having a concentration of less than 50% by weight, and water are mixed together to prepare a mixed solution containing 1.0% to 30.0% by weight of sulfuric acid, 0.5% to 40% by weight of hydrogen peroxide and 50.0% to 94.0% by weight of water (whose preferred composition is as defined above). The concentration of peroxymonosulfuric acid in this embodiment is also the same as found in the above embodiment.

Particularly preferred is an embodiment where sulfuric acid and aqueous hydrogen peroxide having a concentration of less than 50% by weight are added to water to thereby prepare a mixed solution containing 1.0% to 30.0% by weight of sulfuric acid, 0.5% to 40% by weight of hydrogen peroxide and 50.0% to 94.0% by weight of water (whose preferred composition is as defined above). The concentration of peroxymonosulfuric acid in this embodiment is also the same as found in the above embodiment.

Although sulfuric acid, hydrogen peroxide and water may be mixed in a reaction tank, they may be mixed in another tank and then transferred to the reaction tank. Pulp may be provided after preparation of the mixed solution or may have been provided in advance into the reaction tank. Alternatively, pulp may also be provided during preparation of the mixed solution at any timing, i.e., after addition of any of the chemical solutions.

Additional information is provided for peroxymonosulfuric acid. The initial concentration of peroxymonosulfuric acid is affected not only by the added amount and concentration of water, sulfuric acid or aqueous hydrogen peroxide, but also by how they are mixed. For example, in the case of using sulfuric acid in relatively high concentration and/or aqueous hydrogen peroxide in relatively high concentration, when sulfuric acid and aqueous hydrogen peroxide are mixed and then diluted with water, the initial concentration of peroxymonosulfuric acid (i.e., the concentration immediately after mixing) tends to be higher than the concentration of peroxymonosulfuric acid in an equilibrium solution. On the other hand, for example, in the case of using aqueous hydrogen peroxide which has been diluted and/or sulfuric acid which has been diluted, the initial concentration of peroxymonosulfuric acid tends to be lower than the concentration of peroxymonosulfuric acid in the equilibrium solution. The composition of the mixed solution may begin to change toward the equilibrium composition, depending on the conditions used for the subsequent treatment. If such a time-dependent change in the composition is not favorable, the mixed solution may be prepared such that the concentration of peroxymonosulfuric acid is close to the concentration of peroxymonosulfuric acid in the equilibrium solution containing sulfuric acid, hydrogen peroxide and water, or alternatively, the mixed solution may be provided for the subsequent step after reaching an equilibrium state. The mixed solution will reach the equilibrium state by being mixed at a sufficient temperature for a sufficient period of time. For example, the mixed solution may reach the equilibrium state by being mixed at 60°C for 10 to 180 minutes, at 70°C for 10 to 120 minutes, or at 90°C for 10 to 90 minutes.

During the process of cellulose preparation, the mixed solution is regarded as having experienced the temperature and period of time which result in the above equilibrium state. Moreover, the process of the present invention can be carried out, regardless of the concentration of peroxymonosulfuric acid (i.e., even when peroxymonosulfuric acid is in low concentration). Thus, sulfuric acid and hydrogen peroxide may be provided in advance into the mixed solution in amounts in excess of their minimum amounts required to reduce the polymerization degree of pulp, and the liquid waste derived from the mixed solution may be recovered after cellulose preparation, whereby the liquid waste can be reused as a mixed solution with stable composition. Namely, in the liquid waste after cellulose preparation, an equilibrium state is achieved again by peroxide and sulfuric acid present in excess, so that such a mixed solution can be used again for treatment to reduce the polymerization degree of pulp.

The pH of the mixed solution containing water, sulfuric acid and hydrogen peroxide is determined by the weight ratio of these components in the mixed solution, although the pH is preferably 2 or less, more preferably 1 or less.

(3) Treatment for reduction of polymerization degree

Treatment for reduction of polymerization degree is a treatment in which pulp is degraded with a mixed solution containing sulfuric acid, hydrogen peroxide and water to thereby produce cellulose. Preferably, it is accomplished by soaking chemical pulp in the mixed solution for a given period of time at a given temperature.

In a reaction solution containing the mixed solution and chemical pulp, the ratio of the pulp may be in the range of 0.1% to 20% by weight, more preferably 1% to 15% by weight. Any other case is not preferred because the mixed solution cannot sufficiently penetrate into the pulp.

The reaction temperature may be in the range of 20°C to 130°C, more preferably 50°C to 120°C, and even more preferably 60°C to 110°C.

The reaction time may be in the range of 5 minutes to 240 minutes, more preferably 15 minutes to 180 minutes, and even more preferably 30 to 120 minutes.

<Equipment>

The treatment for reduction of polymerization degree can be conducted with a continuous system using a reaction tube or tower or with a batch reaction tank. To ensure sufficient circulation of the mixed solution, a stirring blade may be used or the mixed solution may be circulated through an extraction line.

<Additives and others>

To hasten the penetration of chemicals into pulp, a surfactant may be used as a penetrant. Examples of such a surfactant include, but are not limited to, cationic, anionic, amphoteric and nonionic surfactants, which may be used either alone or in combination.

To facilitate the treatment for reduction of polymerization degree, an organic acid, phosphoric acid, ozone and the like may be added and ultraviolet rays may be irradiated. These can be used alone to facilitate the treatment, but some of them may be used in combination.

Examples of the organic acid include formic acid, acetic acid, propionic acid; oxalic acid and so on, with acetic acid being preferred for use in terms of corrosiveness to the equipment and the resulting effects.

Also, addition of ozone is preferred to facilitate molecular weight reduction. Ozone can be easily prepared from oxygen, air, or oxygen with PSA (pressure swing adsorption).

Further, the reaction may also be facilitated by irradiation of ultraviolet rays in a reaction cell. Ultraviolet rays are classified into UVA, UVB and UVC. As an ultraviolet irradiator, it is possible to use either a low pressure ultraviolet lamp which mainly generates UVB and UVC or a high pressure ultraviolet lamp which mainly generates UVA, although a low pressure ultraviolet lamp is preferred for use.

(4) Step of purifying cellulose

The step of purifying cellulose may include the following steps:

    (a) dehydration step;
    (b) neutralization step or alkaline extraction step;
    (c) washing step;
    (d) drying step;
    (e) grinding step; and
    (f) classification step.

The respective steps will be explained below in sequence.

(a) Dehydration step

The dehydration step is a step where cellulose obtained by the treatment for reduction of polymerization degree is dehydrated with a centrifugal separator, a filter press, a belting press, an Oliver filter, a Young filter or the like.

(b) Neutralization step or alkaline extraction step

The dehydrated cellulose still contains hydrogen peroxide, sulfuric acid and so on. To remove these chemicals, the neutralization step or alkaline extraction step is performed.

The neutralization step is a step where acids remaining in cellulose are neutralized with an alkaline agent. The alkaline agent to be used for neutralization has a concentration in aqueous solution of preferably 0.01% by weight to 50% by weight, more preferably 0.1% by weight to 25% by weight. In a reaction system comprising an aqueous solution of the alkaline agent and cellulose, the ratio of the cellulose is preferably 1% by weight to 15% by weight. Examples of such an alkaline agent include inorganic alkaline substances (e.g., NaOH, KOH, aqueous ammonia) and organic alkaline substances such as trimethylammonium hydroxide, with inorganic alkaline substances being preferred for use in terms of easiness of their after-treatment.

The alkaline extraction step is a step where acid components remaining in acid-treated pulp are neutralized or impurities in cellulose are removed. The alkaline agent to be used in alkaline extraction has a concentration in aqueous solution of preferably 0.01% by weight to 10% by weight, more preferably 0.1% by weight to 1% by weight. In a reaction system comprising an aqueous solution of the alkaline agent and cellulose, the ratio of the cellulose is preferably 1% by weight to 15% by weight. Examples of such an alkaline agent include inorganic alkaline substances (e.g., NaOH, KOH, ammonia) and organic alkaline substances such as trimethylammonium hydroxide, with inorganic alkaline substances being preferred in terms of easiness of their after-treatment.

(c) Washing step

The washing step is a step where cellulose adhered with chemicals is contacted with water to remove the chemicals. For example, a stirring tank equipped with an impeller-type stirrer may be used for this purpose. Without being subjected to the neutralization step or alkaline extraction step, cellulose after the dehydration step may be washed directly. It should be noted that when using a centrifugal filter, an Oliver filter, a Young filter or the like, washing may also be conducted simultaneously with dehydration.

(d) Drying step

Drying techniques used in this step include not only those using commonly used dryers, but also those using solvent replacement. Dryer-based techniques include those using a hot air dryer, a steam tube dryer, a through-flow dryer, a spray dryer, a flash dryer, a drum dryer, a continuous fluidized bed dryer, an infrared dryer, a highfrequency heat dryer, a freeze dryer, a rapid dryer and so on. Solvent replacement-based techniques include, for example, those involving ethanol replacement of water in cellulose and the subsequent air drying.
The drying temperature is preferably 30°C to 220°C. Drying at a temperature exceeding 220°C is not preferred because thermal degradation of cellulose may occur. Drying may be conducted under elevated pressure, under normal pressure or under reduced pressure.

(e) Grinding step

The grinding step is accomplished by mechanical processing, for example, using an impact mill and/or a jet mill either alone or in combination, or alternatively, using the same type of mill several times for processing.
Examples of the impact mill include an Inomizer (Hosokawa Micron Corporation, Japan), a Pulverizer (Hosokawa Micron Corporation, Japan), a Fine impact mill (Hosokawa Micron Corporation, Japan), a Super micron mill (Hosokawa Micron Corporation, Japan), a Fine mill (Nippon Pneumatic Mfg. Co., Ltd., Japan), an Exceed mill (Makino Mfg. Co. Ltd., Japan), a Ultraplex (Makino Mfg. Co. Ltd., Japan), a Contraplex (Makino Mfg. Co. Ltd., Japan), a Coroplex (Makino Mfg. Co. Ltd., Japan), a sample mill (Seishin Enterprise Co., Ltd., Japan), a Bantam mill (Seishin Enterprise Co., Ltd., Japan), a Tornado mill (Sansho Industry Co., Ltd., Japan), a hammer mill (Sansho Industry Co., Ltd., Japan), an NEA mill (Dalton Corporation, Japan), a Free mill (Nara Machinery Co., Ltd., Japan), a New Cosmomizer (Nara Machinery Co., Ltd., Japan), a Turbo mill (Freund-Turbo Corporation), a Gather mill (Nishimura Machine Works Co., Ltd., Japan), a Super powder mill (Nishimura Machine Works Co., Ltd., Japan), a blade mill (Nisshin Engineering Inc., Japan), a Super rotor (Nisshin Engineering Inc., Japan), an NPa crusher (NPa System Co., Ltd., Japan), a pulp mill (Zuiko, Co., Ltd., Japan), a Wonder blender (Osaka Chemical Co., Ltd., Japan), a universal mill (Tokuju Co., Ltd., Japan), a cutter mill (Tokyo Atomizer Mfg. Co., Ltd., Japan), a Turbo cutter (Freund-Turbo Corporation), a knife mill (Pallmann), a rotary cutter mill (Nara Machinery Co., Ltd., Japan), a pulp crusher (Zuiko, Co., Ltd., Japan) and so on.
Examples of the jet mill include a Nano jetmizer (Aishin Nano Technologies Co., Ltd., Japan), an MSC mill (Nippon Coke & Engineering Co., Ltd., Japan), a Micron jet (Hosokawa Micron Corporation, Japan), a counter jet mill (Hosokawa Micron Corporation, Japan), a cross jet mill (Kurimoto, Ltd., Japan), a supersonic jet mill (Nippon Pneumatic Mfg. Co., Ltd., Japan), a super jet mill (Nisshin Engineering Inc., Japan), a Ceren miller (Masuko Sangyo Co., Ltd., Japan), a New Microcyclomat (Masuno Seisakusho Ltd., Japan), a Kryptron (Kawasaki Heavy Industries, Ltd., Japan) and so on.

(f) Classification step

The classification step is an operation where cellulose is divided by particle size through dry classification, wet classification or screening classification. The resulting cellulose may optionally be classified before use.
When using a spray dryer, drying, micronization and classification can be conducted at the same time.

(5) Step of reusing the mixed solution containing sulfuric acid, hydrogen peroxide and water

As described above, in the present invention, the mixed solution containing sulfuric acid, hydrogen peroxide and water used in the treatment for reduction of polymerization degree can be used repeatedly by being recovered from the dehydration step and/or the washing step. The mixed solution may be supplemented with hydrogen peroxide and sulfuric acid to compensate for their consumption during the treatment for reduction of polymerization degree.

<Cellulose>

(1) Brightness by Hunter

Cellulose prepared by the process of the embodiment has a brightness by Hunter of 90% or more. The brightness by Hunter is more preferably 95% or more, and particularly preferably 97% or more. The brightness by Hunter is, for example, 90% to 99%, 92% to 98%, or 95% to 98%. Measurement may be accomplished as follows.

Using a color difference meter, a sample mounted on a sampling stage for powder and paste is measured for its surface color to determine its brightness by Hunter. The brightness by Hunter can be determined by the following equation.

$$W\ (Lab)\ =\ 100 - [(100-L)^2\ +\ a^2\ +\ b^2]^{1/2}$$

W (Lab): brightness by Hunter of cellulose
L: psychometric lightness
a: color coordinate representing the blue-yellow dimension
b: color coordinate representing the green-red dimension

(2) Average polymerization degree

Cellulose prepared by the process of the embodiment has an average polymerization degree of 350 or less, preferably 300 or less, and particularly preferably 250 or less. The average polymerization degree is, for example, 100 to 350, 100 to 300, or 100 to 250. The average polymerization degree is measured in accordance with the viscosimetry using copper ethylene diamine described in Crystalline Cellulose Identification Test (3) in the Guide for the 16th revised edition of the Japanese Pharmacopoeia.

EXAMPLES

The present invention will be further described in more detail by way of the following examples, comparative examples and reference examples, which are not intended to limit the scope of the invention.

(1) Test conditions

<Water used>

In the following examples, comparative examples and reference examples, ion exchanged water obtained with an ultrapure water generator (Autopure WR-7000, Yamato Scientific Co., Ltd., Japan) was used. The ion exchanged water used had an electric conductivity of 18.2 MΩ (25.0°C) and a TOC content of 5 ppb.

<pH measurement>

Unless otherwise specified, the pH was measured using a main unit (D-51, Horiba, Ltd., Japan) and a pH electrode (9615-10D, Horiba, Ltd., Japan).

<Quantification of peroxymonosulfuric acid>

The total peroxide concentration in the mixed solution was quantified by using 0.1 mol/L sodium thiosulfate as a titration reagent and using starch as an indicator. Next, the hydrogen peroxide concentration in the mixed solution was quantified by using 0.025 mol/L cerium sulfate as a titration reagent and using ferroin as an indicator. The peroxymonosulfuric acid concentration was determined by subtracting the hydrogen peroxide concentration from the total peroxide concentration.

<Brightness by Hunter>

Using a color difference meter, a sample mounted on a sampling stage for powder and paste was measured for its surface color to determine its brightness by Hunter (hereinafter also simply referred to as "brightness"). For calculation of the brightness by Hunter, the following equation was used.

$$W\ (Lab)\ =\ 100-[(100-L)^2\ +\ a^2\ +\ b^2]^{1/2}$$

W (Lab): brightness by Hunter of cellulose
L: psychometric lightness
a: color coordinate representing the blue-yellow dimension
b: color coordinate representing the green-red dimension

<Average polymerization degree>

The average polymerization degree was measured in accordance with the viscosimetry using copper ethylene diamine described in Crystalline Cellulose Identification Test (3) in the Guide for the 16th revised edition of the Japanese Pharmacopoeia.

(2) Examples and Comparative Examples

Table 1 shows the composition of sulfuric acid/hydrogen peroxide/water used in the treatment for reduction of polymerization degree in the examples and comparative examples. In Table 1, numerical values given for sulfuric acid (% by weight) and hydrogen peroxide (% by weight) represent the concentrations of sulfuric acid and hydrogen peroxide in each mixed solution containing sulfuric acid, hydrogen peroxide and water, expressed as undiluted (i.e., 100%) sulfuric acid and hydrogen peroxide. The symbols A to K in Table 1 correspond to the vertices A to K in Fig. 1.

<Example 1>

To ion exchanged water (78.6 g), 95% by weight of sulfuric acid (2.8 g) and 35% by weight of aqueous hydrogen peroxide (7.7 g) were added sequentially to prepare an aqueous solution (90 g) containing 3% by weight of sulfuric acid and 3% by weight of hydrogen peroxide. This solution and 10 g (bone dry weight) of bleached broad-leaved tree pulp cut into strips of 40 mm length and 5 mm width (brightness: 95.1%, polymerization degree: 1,566) were reacted at 90°C for 120 minutes. After the reaction, the reaction mixture was subjected to suction filtration, washed three times with ion exchanged water and then subjected again to suction filtration. In the final washing step, the suspension containing cellulose and ion exchanged water was measured for its pH with a test paper (UNIV, Toyo Roshi Kaisha, Ltd., Japan), confirming that its pH was within the range of 5 to 7. This sample was dried in a vacuum dryer (VACUM OVEN AVO-250N, AS ONE Corporation, Japan) at 70°C at 100 mmHg or less, and then ground in a small impact mill (Wonder blender, Osaka Chemical Co., Ltd., Japan).
The resulting cellulose was measured for its polymerization degree and brightness. The results obtained are shown in Table 1. Moreover, the concentration of peroxymonosulfuric acid in the mixed solution containing sulfuric acid, hydrogen peroxide and water is also shown (the concentration immediately after mixing).

<Examples 2 to 21>

The same procedure as shown in Example 1 was repeated, except that the mixing ratio of sulfuric acid/hydrogen peroxide/water was varied in accordance with the composition indicated for Examples 2 to 21 in Table 1.

<Example 22>

The same procedure as shown in Example 1 was repeated, except that the mixing ratio of sulfuric acid/hydrogen peroxide/water was varied in accordance with the composition indicated for Example 22 in Table 1 and the reaction temperature for the treatment for reduction of polymerization degree was changed to 80°C.

<Example 23>

To 35% by weight of aqueous hydrogen peroxide (14.0 g), 95% by weight of sulfuric acid (44.6 g) was added dropwise while keeping the temperature at 70°C, and then cooled to room temperature (25°C). This solution was found to have a pH of -0.20 and a peroxymonosulfuric acid concentration of 17.0% by weight. This solution was diluted with water to give a total weight of 263.7 g, followed by mixing. The peroxymonosulfuric acid concentration in the mixed solution diluted with water was found to be 3.0% by weight. In this mixed solution (135 g), 15 g (bone dry weight) of bleached broad-leaved tree pulp cut into strips of 40 mm length and 5 mm width (brightness: 95.1%, polymerization degree: 1,566) was soaked and reacted at 90°C for 2 hours. After the reaction, the reaction mixture was subjected to suction filtration, washed three times with ion exchanged water and then subjected again to suction filtration. The residue collected by filtration was adjusted to pH 12.9 with 1% by weight of aqueous sodium hydroxide and then heated at 100°C for 1 hour (alkaline extraction). Subsequently, the residue was subjected to suction filtration, washed three times with ion exchanged water and then subjected again to suction filtration. The residue collected by filtration was dried in a compartment dryer and ground in a small impact mill.

The resulting cellulose was found to have a polymerization degree of 267 and a brightness by Hunter of 90.8%.

The weight ratio of water, sulfuric acid and hydrogen peroxide is close to that of Example 4 (vertex D). The difference from Example 4 is the presence or absence of alkaline extraction treatment.

<Example 24>

15 g (bone dry weight) of bleached broad-leaved tree pulp cut into strips of 40 mm length and 5 mm width (brightness: 95.1%, polymerization degree: 1,566) was soaked in a fully mixed solution prepared from 30 g of the mixed solution prepared in Example 23 and ion exchanged water in an amount required to give a pulp concentration of 10% by weight, followed by reaction at 105°C for 2 hours. After the reaction, the reaction mixture was subjected to suction filtration, washed three times with ion exchanged water and then subjected again to suction filtration. The residue collected by filtration was adjusted to pH 12.9 with 1% by weight of aqueous sodium hydroxide and then heated at 80°C for 1 hour (alkaline extraction). Subsequently, the residue was subjected to suction filtration, washed three times with ion exchanged water and then subjected again to suction filtration. The residue collected by filtration was dried in a compartment dryer and ground in a small impact mill. The resulting cellulose was found to have a polymerization degree of 266 and a brightness by Hunter of 94.5%.

<Example 25>

50 g (bone dry weight) of bleached needle-leaved tree pulp cut into strips of 40 mm length and 5 mm width (brightness: 88.0%, polymerization degree: 1,254) was soaked in 450 g of the mixed solution prepared in Example 23 and reacted at 90°C for 2 hours. After the reaction, the reaction mixture was subjected to suction filtration, washed three times with ion exchanged water and then subjected again to suction filtration. The residue collected by filtration was dispersed in water and then neutralized with 1% by weight of aqueous ammonia. The pH after neutralization was found to be 6.6. The resulting cellulose was found to have a polymerization degree of 235.

<Comparative Examples 1 to 12>

The same procedure as shown in Example 1 was repeated, except that the mixing ratio of sulfuric acid/hydrogen peroxide/water was varied in accordance with the composition indicated for Comparative Examples 1 to 12 in Table 1.

<Comparative Example 13>

The same procedure as shown in Example 1 was repeated, except that the mixing ratio of sulfuric acid/hydrogen peroxide/water was varied in accordance with the composition indicated for Comparative Example 13 in Table 1 and the reaction temperature for the treatment for reduction of polymerization degree was changed to 50°C.

<Comparative Example 14>

15 g (bone dry weight) of bleached broad-leaved tree pulp cut into strips of 40 mm length and 5 mm width (brightness: 95.1%, polymerization degree: 1,566) was provided into 30 g of the solution prepared in Example 23, which was used before being diluted with water (peroxymonosulfuric acid concentration: 17.0% by weight). As a result, pulp turned black.

[Table 1-1]

| | | Sulfuric acid (% by weight) | Hydrogen peroxide (% by weight) | Water (% by weight) | Polymerization degree | Brightness (%) | Peroxymonosulfuric acid (% by weight) |
|---|---|---|---|---|---|---|---|
| Example-1 | A | 3.0 | 3.0 | 94.0 | 322 | 97.7 | 0.58 |
| Example-2 | B | 7.0 | 0.5 | 92.5 | 336 | 97.4 | 0.18 |
| Example-3 | C | 24.0 | 0.5 | 75.5 | 238 | 94.1 | 0.11 |
| Example-4 | D | 30.0 | 3.0 | 67.0 | 208 | 91.8 | 1.07 |
| Example-5 | E | 30.0 | 10.0 | 60.0 | 153 | 92.0 | 1.87 |
| Example-6 | F | 10.0 | 40.0 | 50.0 | 109 | 92.5 | 17.07 |
| Example-7 | G | 1.0 | 24.0 | 75.0 | 227 | 98.3 | 6.40 |
| Example-8 | H | 3.0 | 9.0 | 88.0 | 258 | 98.0 | 3.38 |
| Example-9 | I | 6.0 | 2.0 | 92.0 | 298 | 97.8 | 0.59 |
| Example-10 | J | 6.0 | 9.0 | 85.0 | 246 | 98.1 | 2.89 |
| Example-11 | K | 12.0 | 3.0 | 85.0 | 244 | 98.0 | 0.83 |
| Example-12 | | 9.0 | 1.0 | 90.0 | 309 | 97.7 | |
| Example-13 | | 9.0 | 3.0 | 88.0 | 281 | 98.1 | |
| Example-14 | | 15.0 | 10.0 | 75.0 | 164 | 96.0 | |
| Example-15 | | 20.0 | 20.0 | 60.0 | 142 | 95.8 | |
| Example-16 | | 20.0 | 10.0 | 70.0 | 183 | 98.3 | |
| Example-17 | | 5.0 | 30.0 | 65.0 | 188 | 94.2 | |
| Example-18 | | 15.0 | 15.0 | 70.0 | 152 | 98.0 | |

[Table 1-2]

| | Sulfuric acid (% by weight) | Hydrogen peroxide (% by weight) | Water (% by weight) | Polymerization degree | Brightness (%) | Peroxymonosulfuric acid (% by weight) |
|---|---|---|---|---|---|---|
| Example-19 | 10.0 | 20.0 | 70.0 | 183 | 98.5 | |
| Example-20 | 10.0 | 30.0 | 60.0 | 137 | 98.4 | |
| Example-21 | 16.0 | 2.0 | 82.0 | 247 | 96.8 | 0.63 |
| Example-22 | 16.0 | 2.0 | 82.0 | 320 | 96.6 | 0.63 |
| Comparative Example-1 | 0.0 | 3.0 | 97.0 | 989 | 91.6 | 0 |
| Comparative Example-2 | 3.0 | 0.0 | 97.0 | 475 | 96.9 | 0 |
| Comparative Example-3 | 3.0 | 2.0 | 95.0 | 370 | 97.7 | 0.33 |
| Comparative Example-4 | 7.0 | 0.0 | 93.0 | 373 | 96.8 | 0 |

(continued)

| | Sulfuric acid (% by weight) | Hydrogen peroxide (% by weight) | Water (% by weight) | Polymerization degree | Brightness (%) | Peroxymonosulfuric acid (% by weight) |
|---|---|---|---|---|---|---|
| Comparative Example-5 | 24.0 | 0.0 | 76.0 | 241 | 70.0 | 0 |
| Comparative Example-6 | 30.0 | 0.0 | 70.0 | 222 | 44.9 | 0 |
| Comparative Example-7 | 0.0 | 25.0 | 75.0 | 351 | 94.7 | 0 |
| Comparative Example-8 | 40.0 | 0.0 | 60.0 | 199 | 20.4 | 0 |
| Comparative Example-9 | 40.0 | 1.0 | 59.0 | 209 | 25.5 | 0.35 |
| Comparative Example-10 | 30.0 | 1.0 | 69.0 | 222 | 67.8 | 0.22 |
| Comparative Example-11 | 30.0 | 2.0 | 68.0 | 213 | 83.7 | 0.60 |
| Comparative Example-12 | 40.0 | 10.0 | 50.0 | 151 | 55.0 | 2.94 |
| Comparative Example-13 | 16.0 | 2.0 | 82.0 | 833 | - | 0.63 |

(3) Reference Examples

<Reference Example 1>

To 35% by weight of aqueous hydrogen peroxide (24.0 g), 95% by weight of sulfuric acid (76.0 g) was added dropwise while keeping the temperature at 70°C. This solution was cooled to room temperature (25°C) and then diluted with 350.0 g of ion exchanged water, followed by measuring the concentration of peroxymonosulfuric acid. The peroxymonosulfuric acid concentration was found to be 3.0% by weight.

<Reference Example 2>

To ion exchanged water (350 g), 35% by weight of aqueous hydrogen peroxide (24.0 g) was mixed and 95% by weight of sulfuric acid (76.0 g) was added dropwise while keeping the temperature at 70°C. This solution was cooled to room temperature (25°C), followed by measuring the concentration of peroxymonosulfuric acid. The peroxymonosulfuric acid concentration was found to be 0.3% by weight. Reference Example 1 and Reference Example 2 resulted in different peroxymonosulfuric acid concentrations, thus indicating that the concentration of peroxymonosulfuric acid generated would vary depending on the mixing procedures, and that the mixed solution would not immediately reach its equilibrium composition at room temperature.

<Reference Example 3>

The solution prepared in Reference Example 1 was allowed to stand at room temperature (25°C) and the peroxymonosulfuric acid concentration was measured after 0 minutes, 15 minutes, 30 minutes, 45 minutes, 60 minutes, 90 minutes and 120 minutes to confirm time-dependent changes in the peroxymonosulfuric acid concentration. The results obtained are shown in Table 2. It is indicated that the peroxymonosulfuric acid concentration does not change at room temperature.

<Reference Example 4>

The solution prepared in Reference Example 1 was allowed to stand at 90°C and the peroxymonosulfuric acid concentration was measured after 0 minutes, 15 minutes, 30 minutes, 45 minutes, 60 minutes, 90 minutes and 120 minutes to confirm time-dependent changes in the peroxymonosulfuric acid concentration. It is indicated that the peroxymonosulfuric acid concentration decreases with time and reaches a constant level after 90 minutes (equilibrium concentration).

[Table 2]

| Time elapsed | 0 min | 15 min | 30 min | 45 min | 60 min | 90 min | 120 min |
|---|---|---|---|---|---|---|---|
| Room temperature (25°C), % by weight | 2.9 | 3.1 | 3.0 | 2.9 | 2.9 | 3.0 | 3.0 |
| 90°C, % by weight | 3.0 | 2.6 | 2.0 | 1.5 | 1.2 | 0.7 | 0.7 |

<Reference Example 6>

To 70% by weight of aqueous hydrogen peroxide (3.9 g), 95% by weight of sulfuric acid (13.3 g) was added dropwise while keeping the temperature at 70°C, and then cooled to room temperature (25°C). This aqueous solution was found to have a peroxymonosulfuric acid concentration of 24.4% by weight. This solution was diluted to 106.7 g with water. The peroxymonosulfuric acid concentration was found to be 4.2%.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A process for preparing a cellulose, using:

   a chemical pulp; and
   a mixed solution containing 1.0% to 30.0% by weight of a sulfuric acid, 0.5% to 40% by weight of a hydrogen peroxide and 50.0% to 94.0% by weight of a water,
   wherein the cellulose has a polymerization degree of 350 or less and a brightness by Hunter of 90% or more.

2. The process according to claim 1, wherein
   the mixed solution has a mix ratio of the sulfuric acid (x), the hydrogen peroxide (y) and the water (z), which is expressed by (x, y, z),
   the (x, y, z) has a value present on a line or inside of a heptagon ABCDEFG, and
   the heptagon ABCDEFG is formed by vertices A to G having the following (x, y, z) in a ternary diagram for the sulfuric acid (x)-hydrogen peroxide (y)-water (z):

   A (3.0, 3.0, 94.0)
   B (7.0, 0.5, 92.5)
   C (24.0, 0.5, 75.5)
   D (30.0, 3.0, 67.0)
   E (30.0, 10.0, 60.0)
   F (10.0, 40.0, 50.0)
   G (1.0, 24.0, 75.0)

   (wherein x, y and z each represent a ratio by weight, and x + y + z = 100).

3. The process according to claim 2, wherein the mix ratio (x, y, z) has a value present on a line or inside of a heptagon HICDEFG, provided that:

the vertex A is replaced with a vertex H (3.0, 9.0, 88.0); and
the vertex B is replaced with a vertex I (6.0, 2.0, 92.0).

4. The process according to claim 2, wherein the mix ratio (x, y, z) has a value present on a line or inside of a heptagon JKCDEFG, provided that:

the vertex A is replaced with a vertex J (6.0, 9.0, 85.0); and
the vertex B is replaced with a vertex K (12.0, 3.0, 85.0).

5. The process according to any one of claims 1 to 4, comprising:

mixing the sulfuric acid, the hydrogen peroxide and the water to prepare the mixed solution; and
soaking the chemical pulp in the mixed solution.

6. The process according to any one of claims 1 to 5, wherein a reaction temperature of the chemical pulp and the mixed solution is 60°C to 110°C.

7. The process according to claim 5 or 6, wherein the mixed solution is prepared by adding the sulfuric acid and the hydrogen peroxide to the water.

8. The process according to any one of claims 5 to 7, wherein the mixed solution is prepared by mixing the sulfuric acid, an aqueous hydrogen peroxide having a concentration of less than 50% by weight, and the water.

9. The process according to any one of claims 1 to 8, wherein the mixed solution contains a peroxymonosulfuric acid in a concentration of 0.01% to 25% by weight in the mixed solution.

10. The process according to claim 9, wherein the concentration of the peroxymonosulfuric acid in the mixed solution is equal to or less than a concentration of the peroxymonosulfuric acid in an equilibrium solution containing a sulfuric acid, a hydrogen peroxide and a water.

11. The process according to claim 10, wherein the concentration of the peroxymonosulfuric acid in the mixed solution is 0.01% to 17.1% by weight.

12. Cellulose prepared by the process according to any one of claims 1 to 11, having a polymerization degree of 350 or less and a brightness by Hunter of 90% or more.

Fig. 1

**INTERNATIONAL SEARCH REPORT**

| International application No. |
| --- |
| PCT/JP2014/072171 |

A. CLASSIFICATION OF SUBJECT MATTER
*C08B15/00*(2006.01)i, *D21C9/10*(2006.01)n

According to International Patent Classification (IPC) or to both national classification and IPC

B. FIELDS SEARCHED

Minimum documentation searched (classification system followed by classification symbols)
C08B15/00, D21C9/10

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)
CAplus/REGISTRY(STN), JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
| --- | --- | --- |
| X | JP 2003-504427 A  (Edward Mendell Co.), 04 February 2003 (04.02.2003), entire text (particularly, examples 2 to 5) & US 2003/0131957 A1   & US 2005/0145351 A1 & EP 1226179 A1        & WO 2001/002441 A1 | 1-12 |
| A | 5th edition Kagaku Binran Oyo Kagaku Hen I, Maruzen Co., Ltd., 14 September 1995 (14.09. 1995) (received date), pages I-708, I-803 | 1-12 |
| A | Kagaku Binran Kiso Hen revised 3rd edition, 25 June 1984 (25.06.1984), page II-6 | 1-12 |

☒  Further documents are listed in the continuation of Box C.          ☐  See patent family annex.

* Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search
18 September, 2014 (18.09.14) | Date of mailing of the international search report
30 September, 2014 (30.09.14) |
| --- | --- |
| Name and mailing address of the ISA/
Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2014/072171 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2007/132836 A1 (Oji Paper Co., Ltd.),<br>22 November 2007 (22.11.2007),<br>entire text<br>& US 2009/0183845 A1 & EP 2022887 A1<br>& CN 101443514 A | 1-12 |
| A | JP 2007-169831 A (Mitsubishi Gas Chemical Co., Inc.),<br>05 July 2007 (05.07.2007),<br>entire text<br>(Family: none) | 1-12 |
| A | JP 2007-308815 A (Oji Paper Co., Ltd.),<br>29 November 2007 (29.11.2007),<br>entire text<br>(Family: none) | 1-12 |
| A | JP 2008-088606 A (Oji Paper Co., Ltd.),<br>17 April 2008 (17.04.2008),<br>entire text<br>(Family: none) | 1-12 |
| A | JP 2008-095220 A (Oji Paper Co., Ltd.),<br>24 April 2008 (24.04.2008),<br>entire text<br>(Family: none) | 1-12 |
| A | WO 2009/081714 A1 (Mitsubishi Gas Chemical Co., Inc.),<br>02 July 2009 (02.07.2009),<br>entire text<br>& US 2010/0314056 A1 & EP 2224055 A1<br>& CN 002709526 A | 1-12 |
| A | JP 2010-265564 A (Mitsubishi Gas Chemical Co., Inc.),<br>25 November 2010 (25.11.2010),<br>entire text<br>(Family: none) | 1-12 |
| A | JP 2010-270410 A (Mitsubishi Gas Chemical Co., Inc.),<br>02 December 2010 (02.12.2010),<br>entire text<br>(Family: none) | 1-12 |
| A | JP 2010-285697 A (Mitsubishi Gas Chemical Co., Inc.),<br>24 December 2010 (24.12.2010),<br>entire text<br>(Family: none) | 1-12 |

Form PCT/ISA/210 (continuation of second sheet) (July 2009)

**INTERNATIONAL SEARCH REPORT**

International application No.

PCT/JP2014/072171

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-285698 A  (Mitsubishi Gas Chemical Co., Inc.), 24 December 2010 (24.12.2010), entire text (Family: none) | 1-12 |
| A | JP 2011-001636 A  (Mitsubishi Gas Chemical Co., Inc.), 06 January 2011 (06.01.2011), entire text (Family: none) | 1-12 |
| A | JP 2011-001637 A  (Mitsubishi Gas Chemical Co., Inc.), 06 January 2011 (06.01.2011), entire text (Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2978446 A
- JP 2003504427 W
- JP 2012036508 A
- JP 2005029627 A

**Non-patent literature cited in the description**

- *Pulp and Paper Technology Times,* August 1985, 5